Europäisches Patentamt

European Patent Office

Office européen des brevets

(19)

(11) Veröffentlichungsnummer: **0 450 305 A1**

## (12) EUROPÄISCHE PATENTANMELDUNG

(21) Anmeldenummer: 91102865.2

(22) Anmeldetag: 27.02.91

(51) Int. Cl.⁵: **G01N 21/64**, G02F 1/37

(30) Priorität: 17.03.90 DE 4008621

(43) Veröffentlichungstag der Anmeldung:
09.10.91 Patentblatt 91/41

(84) Benannte Vertragsstaaten:
**DE FR GB**

(71) Anmelder: **DORNIER GMBH**
**Postfach 1420**
**W-7990 Friedrichshafen 1(DE)**

(72) Erfinder: **Walker, Karl-Heinz, Dr.**
**Baitenhauserstrasse 6**
**W-7758 Daisendorf(DE)**

(74) Vertreter: **Landsmann, Ralf, Dipl.-Ing.**
**DORNIER GMBH - Patentabteilung - Kleeweg**
**3**
**W-7990 Friedrichshafen 1(DE)**

(54) **Faseroptischer Sensor.**

(57) Faseroptischer Sensor für die Fluoreszenzspektroskopie zur stoffspezifischen Konzentrationsbestimmung in Gasen und Flüssigkeiten.

Fig. 3

Die Erfindung betrifft einen faseroptischen Sensor, insbesondere für die Fluoreszenzspektroskopie.

Die Fluoreszenzspektroskopie wird im Bereich der Analytik zur stoffspezifischen Konzentrationsbestimmung in Gasen und Flüssigkeiten eingesetzt.

Bei Fluoreszenzspektroskopie wird ultraviolettes Licht in das zu untersuchende Medium geführt und von den dort vorhandenen Stoffen absorbiert. Sind diese Stoffe fluoreszierend, dann wird Licht charakteristischer Wellenlänge in ganz charakteristischen Zeiten emittiert. Durch spektralaufgelöste Detektion dieses Fluoreszenzlichtes kann ein stoffselektiver Nachweis erfolgen, wobei die Fluoreszenzintensität direkt proportional zur vorliegenden Stoffkonzentration ist. Stand der Technik zum Nachweis der Fluoreszenz sind relativ komplexe optische Aufbauten. Eine Trennung von Meßgerät und Meßort, wie dies bei In-Line-Anwendungen in der Prozeßtechnik häufig notwendig ist, können mit solchen Geräten nicht oder nur schwer durchgeführt werden.

So ist aus der **DE-OS 27 13 396** ein Verfahren und eine Vorrichtung zur Kennzeichnung oder Identifizierung eines Leuchtmaterial enthaltenden oder tragenden Körpers bekannt. Dabei wird Licht aus einer Anregungslichtquelle über eine Einkoppeleinrichtung in eine Lichtleitfaser eingekoppelt und zum zu untersuchenden Körper geleitet. Das reflektierte Licht wird über andere Lichtleitfasern zu Filtern und Photodetektoren geleitet.

Vorliegender Erfindung liegt die Aufgabe zugrunde, einen einfach aufgebauten Sensor zu schaffen, mit dem empfindliche und stoffspezifische Analysen in Flüssigkeiten und Gasen durchgeführt werden können und der aufgrund seiner Bauweise für In-Line-Anwendungen unter kritischen Bedingungen eingesetzt werden kann.

Die Aufgabe wird durch einen faseroptischen Sensor nach Anspruch 1 gelöst. Ausgestaltungen sind Gegenstand von Unteransprüchen.

Gemäß der Erfindung wird ein faseroptischer Sensor geschaffen, der über eine Lichtleitfaser angesteuert wird und direkt in ein zu untersuchendes Medium eingebracht werden kann. Durch Einsatz einer Spiegeloptik im Meßkopf erreicht man, daß das Fluoreszenzlicht, trotz verschiedener Wellenlänge, genau an derselben Stelle beobachtet werden kann, wo der Anregungsfokus liegt. Das Fluoreszenzlicht wird mit der gleichen Lichtleitfaser zum Detektor geführt. Insbesondere beim Einsatz von Abbildungssystemen aus Spiegeln können optimale Intensitätsausbeuten erzielt werden, so daß ein kleiner, einfacher und robuster Sensor aufgebaut werden kann.

Das Anregungslicht aus dem Laser oder einer anderen UV-Lichtquelle wird mittels einer Einkoppeleinrichtung in die Lichtleitfaser eingekoppelt. Laser können beispielsweise Excimer-, Farbstoff-, Stickstoff- oder Diodenlaser sein. Am Ende der Lichtleitfaser tritt das Anregungslicht aus und wird mittels einer geeigneten Optik im zu untersuchenden Medium fokussiert. Aufgrund des achromatischen Verhaltens kann beispielsweise beim Einsatz von Spiegeln das erzeugte Fluoreszenzlicht wellenlängenunabhängig über dieselbe Optik aufgenommen werden. Zur Anwendung kommen können als Optik Hohlspiegel, Spiegelsysteme ähnlich einem Spiegelteleskop oder auch achromatische Linsen.

Über beispielsweise einen wellenlängenabhängigen Faserkoppler wird das Fluoreszenzlicht ausgekoppelt und in ein Spektrometer geführt. Als Mittel der Auskopplung und Trennung des Fluoreszenzlichtes vom Anregungslicht können auch dielektrische Spiegel eingesetzt werden.

Die Intensitätsinformation wird in einer geeigneten Auswerteeinheit weiterverarbeitet und kann zur Konzentrationsbestimmung benutzt werden. Dabei kann die Auswerteeinheit ein Monochromator mit einem Photodetektor und angeschlossener Elektronik sein. Ebenfalls möglich ist, die Auswerteeinheit als eine Interferenzfilteroptik mit einem Photodetektor und anschließender Elektronik vorzusehen. In beiden Fällen kann der Photodetektor auch ein Photomultiplier sein. Auch eine Auswerteeinheit, bestehend aus einem Simultan-Spektrometer mit einem Zeilendetektor, kann zur Anwendung gelangen.

Ein wesentliches Problem bei dem Einsatz von Lichtleitfasern im kurzwelligen Lichtbereich ist, aufgrund von Rayleigh-Streuung, die mit $1/\lambda^4$ zunehmende Faserdämpfung. Selbst reine Quarzfasern limitieren die maximale Faserlänge auf einige Meter. So liegt die typische Dämpfung einer 110 $\mu$m Quarzfaser bei einer Wellenlänge von 300 nm bei etwa 0.3 dB/m, so daß die Dämpfung einer 100 m langen Faser 30 dB beträgt. Bei einer Wellenlänge von 600 nm beträgt die Dämpfung derselben Faser nach 100 m aber nur maximal 2 dB.

Im Falle der Fluoreszenzspektroskopie müssen viele Stoffe durch kurzwelliges Licht, typischerweise 250 bis 350 nm, angeregt werden, so daß beispielsweise faseroptische Sensoren bisher nur bei sehr hohen Stoffkonzentrationen und sehr kurzen Faserlängen eingesetzt werden können.

Für den erfindungsgemäßen Fluoreszenzsensor wird daher bei der Verwendung großer Lichtleitfaserlängen vorgeschlagen, das Anregungslicht zunächst als intensives langwelliges Licht in der Lichtleitfaser dämpfungsarm über große Strecken zu transportieren, und dann im Meßkopf eine Umwandlung in kurzwelliges Licht vorzunehmen.

Gemäß der Erfindung wird dafür ein Aufbau angegeben, bei dem intensives Laserlicht im sichtbaren Wellenlängenbereich in eine geeignete, dämpfungsarme Lichtleitfaser eingekoppelt und über große Strecken transportiert wird. Am Faserende tritt das Licht aus und wird beispielsweise mittels einer geeigneten Optik in einen Frequenzverdopplerkristall, beispielsweise aus Beta-Barium-Borat (BBO), geführt, so daß bei einer ausreichenden Lichtintensität Licht mit der doppelten Frequenz, in der Regel im UV-Bereich, erzeugt wird. Der Frequenzverdopplerkristall kann auch direkt an das Faserende angrenzen. Das intensive ultraviolette Licht wird ausgefiltert und kann dann direkt zur UV-Anregung bei der Fluoreszenzspektroskopie zugeführt werden. Gegebenenfalls kann eine Erhöhung der Lichtausbeute bei der Frequenzumwandlung durch den Einbau eines Frequenzverdopplerkristalles in einen Resonator erzielt werden.

Die Quantenausbeute von modernen Kristallen, wie beispielsweise dem BBO, liegen bei etwa 30 bis 36 %, so daß eine effiziente Frequenzumwandlung erreicht wird. Andere Materialien für Frequenzverdopplerkristalle sind Lithium-Triborat (LBO), Kaliumdihydrogenphosphat (KDP), Ammoniumdihydrogenphosphat (ADP) oder Neodymyttriumaluminiumtetraborat (NYAB). Die Möglichkeit der Frequenzumwandlung kann beispielsweise auch bei der photothermischen Spektroskopie oder ähnlichen Anwendungen genutzt werden.

Soll eine Frequenzverdopplung bei verschiedenen Wellenlängen möglich sein, so muß der geeignete Phasenanpaßwinkel einstellbar sein. Dies kann erreicht werden durch Verstellen des Kristalls selber, oder durch eine vorgeschaltete Kompensationsoptik für den optimalen Lichteintritt in das Kristallgitter des Frequenzverdopplerkristalls.
Bei der Verwendung kleiner Servo-Motoren für die Verstellung des Kristalls ist es möglich, die dafür erforderliche Energie durch Solarzellen zu erzeugen, die das für die Anregung nicht genutzte Licht in elektrische Energie wandeln.

Die Erfindung wird nachfolgend anhand von Ausführungsbeispielen näher erläutert.

Es zeigen:

Fig. 1     den Aufbau eines faseroptischen Sensors,

Fig. 2     einen weiteren Aufbau eines Sensors,

Fig. 3     eine Variation der Anordnung nach Fig. 1,

Fig. 4     eine Variation der Anordnung nach Fig. 3,

Fig. 5     eine Meßkurve für einen Aufbau nach Fig. 1.

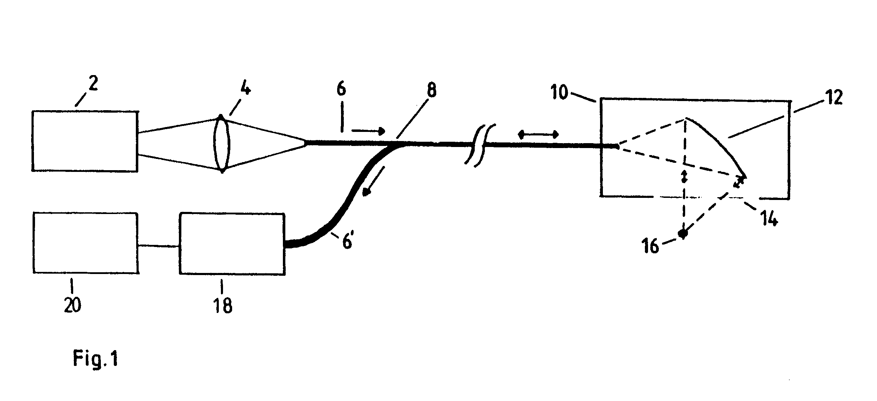

Fig. 1 zeigt den Aufbau eines faseroptischen Sensors zur Fluoreszenzspektroskopie. Eine Anregungslichtquelle 2 wird mittels einer Linse 4 als Koppelvorrichtung in einen Lichtwellenleiter 6 eingekoppelt und zum Meßkopf 10 geführt. In dem Meßkopf 10 befindet sich ein Spiegel 12, der das Anregungslicht durch ein Austrittsfenster 14 in das zu untersuchende Medium 16 fokussiert. Das Fluoreszenzlicht wird über denselben Spiegel 12 zurück in die Faser 6 abgebildet und wird mittels eines wellenlängenabhängigen Kopplers 8 aus der Faser 6 ausgekoppelt und mit einer Faser 6' zu einem Spektrometer 18 geführt, der mit einer Auswerteeinheit 20 verbunden ist, wo die Signale weiterverarbeitet werden.

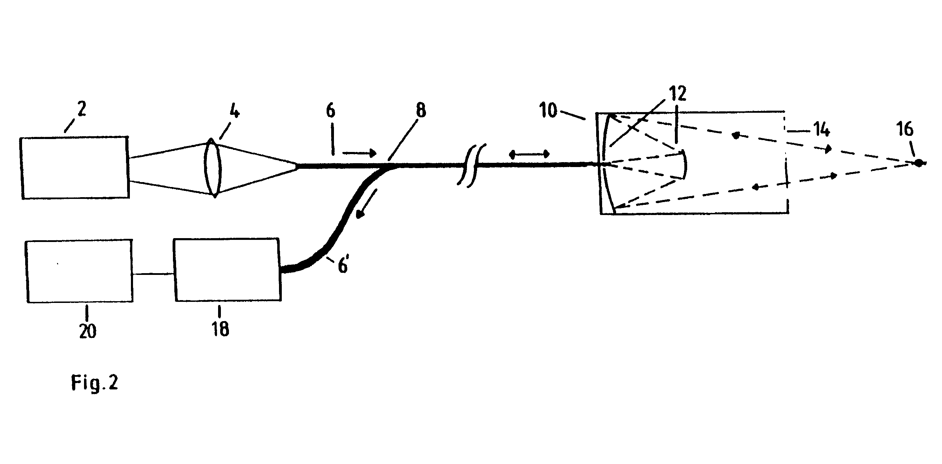

Fig. 2 zeigt einen weiteren Aufbau eines faseroptischen Sensors zur Fluoreszenzspektroskopie. Analog zu Fig. 1 wird das Licht über eine Lichtleitfaser 6 geführt. Die Fokussierung des Lichts in dem Medium 16 wird durch die Anordnung der Spiegel, ähnlich einem Spiegelteleskop, erreicht. Die Aufnahme des Fluoreszenzlichts und die Weiterverarbeitung erfolgt analog zum Sensor in Fig. 1.

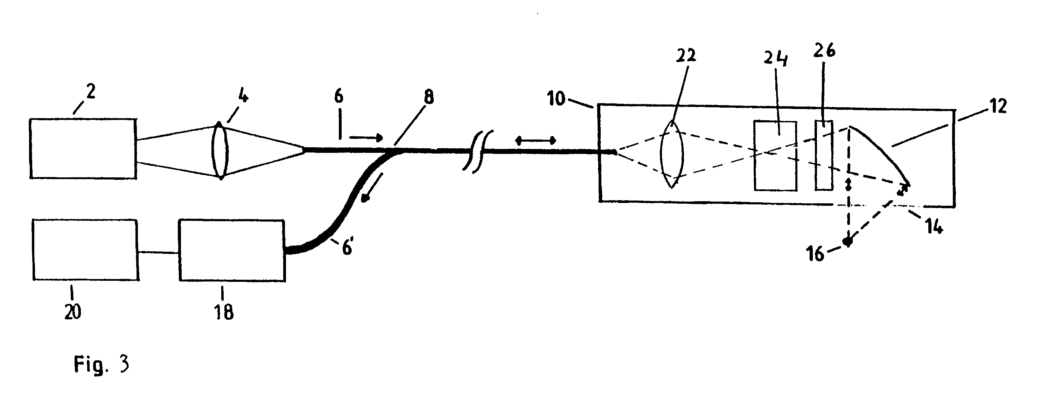

Fig. 3 zeigt einen Aufbau zum Transport von langwelligem Licht und zur Umwandlung in kurzwelliges Licht entsprechend der Anordnung aus Fig. 1. Licht eines intensiven gepulsten Lasers 2 mit der Frequenz $\omega$ wird über eine geeignete Optik 4 in eine dämpfungsarme Lichtleitfaser 6 eingekoppelt und über eine Strecke bis zu beispielsweise einigen hundert Metern transportiert. Am Faserende im Meßkopf 10 wird das austretende Licht durch eine geeignete Optik 22 in einen Frequenzverdopplerkristall 24 fokussiert. Das Licht mit der doppelten Frequenz durchläuft ein Filter 26 und wird analog zu Fig. 1 fokussiert. Als Filter 26 kann beispielsweise ein Kantenfilter verwendet werden.

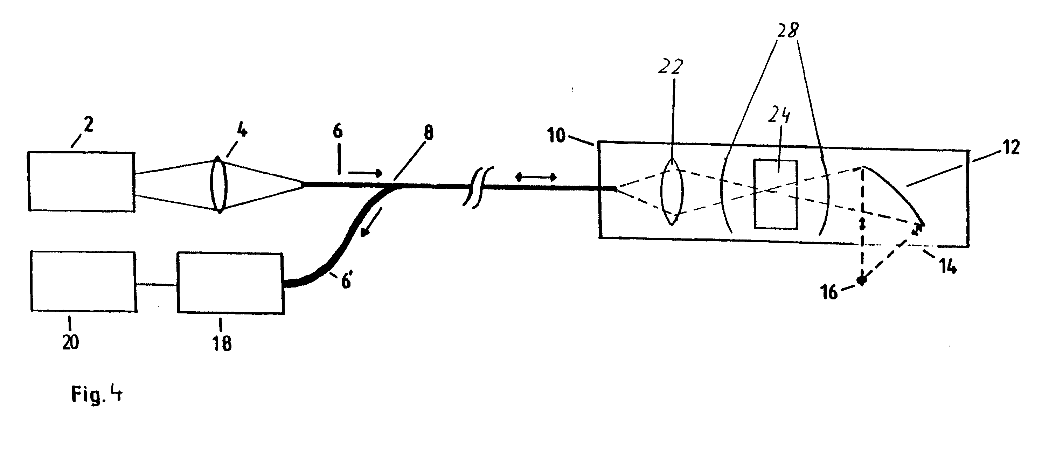

Fig. 4 zeigt eine Variation des Aufbaus nach Fig. 3. Hierbei wird eine Lichtausbeuteerhöhung durch den Einbau des Frequenzverdopplerkristalls 24 in einen Resonator 28 erreicht.

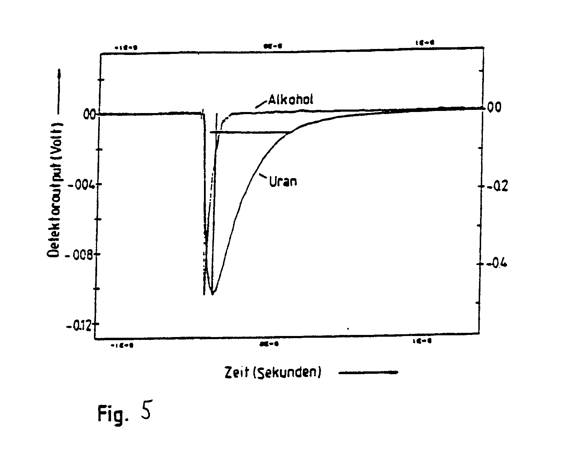

Fig. 5 zeigt eine Meßkurve für einen Aufbau gemäß Fig. 1. Der Sensor wurde zunächst in eine wässrige 100 ppm Uranylnitritlösung (U VI) und anschließend in vergällten Alkohol getaucht. Die Anregung erfolgte jeweils mit einem gepulsten Excimer-Laser (Wellenlänge $\lambda$ = 308 nm). Als Lichtleitfaser wurde eine Quarz-Multimode-Faser mit einem Innendurchmesser von 113 $\mu$m benutzt. Die Meßkurven wurden mit einem Transientenrecorder aufgezeichnet und zeigen deutlich den zeitlichen Verlauf der Fluoreszenzintensität des (U VI) bei einer festen Spektrometerwellenlänge von $\lambda$ = 530 nm sowie den entsprechenden Verlauf für den Alkohol.

Anwendung finden kann vorliegende Erfindung beispielsweise bei einem Aufbau, bei dem der Meßkopf weit von Anregungslichtquelle und Auswerteeinheit entfernt ist. So ist dies beispielsweise der Fall bei Untersuchungen von einem Schiff aus in größeren Wassertiefen, wo allein der Meßkopf in die Tiefe gelassen wird und Lichterzeugung und Auswertung im Schiff geschieht.

**Patentansprüche**

1. Faseroptischer Sensor mit einer Anregungslichtquelle und einer Koppelvorrichtung, mit der das Licht der Anregungslichtquelle in eine Lichtleitfaser eingekoppelt wird, **dadurch gekennzeichnet**, daß die Lichtleitfaser (6) in einen Meßkopf (10) mündet, in dem eine achromatische Optik, bestehend aus wenigstens einem Spiegel (12), der das am Faserende austretende Licht durch ein Austrittsfenster (14) im Meßkopf (10) hindurch in einem zu untersuchenden Medium (16) fokussiert und Fluoreszenzlicht des untersuchten Mediums (16) auf gleichem Wege wieder zurück in die Faser (6) abbildet, vorgesehen ist, wobei das zu untersuchende Medium (16) in einem Meßbereich im Bereich des Brennpunktes der Optik (12) angeordnet ist und eine Vorrichtung (8) vorgesehen ist, die das Fluoreszenzlicht aus der Faser (6) auskoppelt und einer Auswerteeinheit (20) zuführt.

2. Faseroptischer Sensor nach Anspruch 1, **dadurch gekennzeichnetnet**, daß die achromatische Optik (12) ein Hohlspiegel ist.

3. Faseroptischer Sensor nach Anspruch 1, **dadurch gekennzeichnetnet**, daß die achromatische Optik (12) ein Spiegelsystem ähnlich einem Spiegelteleskop ist.

4. Faseroptischer Sensor nach Anspruch 1, **dadurch gekennzeichnetnet**, daß die Optik (12) aus achromatischen Linsen besteht.

5. Faseroptischer Sensor nach wenigstens einem der vorherigen Ansprüche, **dadurch gekennzeichnet**, daß die Vorrichtung (8) zum Auskoppeln des Fluoreszenzlichtes ein wellenlängenabhängiger Koppler ist.

6. Faseroptischer Sensor nach wenigstens einem der Ansprüche 1 bis 4, **dadurch gekennzeichnet**, daß als Vorrichtung (8) zum Auskoppeln des Fluoreszenzlichtes dielektrische Spiegel vorgesehen sind.

7. Faseroptischer Sensor nach wenigstens einem der vorherigen Ansprüche, **dadurch gekennzeichnet**, daß die Auswerteeinheit (20) ein Monochromator mit einem Photodetektor und anschliessender Elektronik ist.

8. Faseroptischer Sensor nach wenigstens einem der Ansprüche 1 bis 6, **dadurch gekennzeichnet**, daß die Auswerteeinheit (20) eine Interferenzfilteroptik mit einem Photodetektor und anschliessender Elektronik ist.

9. Faseroptischer Sensor nach Anspruch 7 oder 8, **dadurch gekennzeichnet**, daß der Photodetektor ein Photomultiplier ist.

10. Faseroptischer Sensor nach wenigstens einem der Ansprüche 1 bis 6, **dadurch gekennzeichnet**, daß die Auswerteeinheit (20) ein Simultan-Spektrometer mit einem Zeilendetektor und anschliessender Elektronik ist.

11. Faseroptischer Sensor nach wenigstens einem der vorherigen Ansprüche, **dadurch gekennzeichnet**, daß die Anregungslichtquelle (2) ein Laser ist.

12. Faseroptischer Sensor nach wenigstens einem der Ansprüche 1 bis 10, **dadurch gekennzeichnet**, daß die Anregungslichtquelle (2) eine UV-Lichtquelle ist.

13. Faseroptischer Sensor nach wenigstens einem der vorherigen Ansprüche, **dadurch gekennzeichnet**, daß der Meßkopf (10) aus einem korrosions- und strahlenbeständigem Material besteht und wasserdicht abgeschlossen ist.

14. Faseroptischer Sensor nach wenigstens einem der vorherigen Ansprüche, **dadurch gekennzeichnet**, daß im Meßkopf (10) ein Frequenzverdopplungskristall (24) im Lichtstrahl vorgesehen ist.

15. Faseroptischer Sensor nach Anspruch 14, **dadurch gekennzeichnet**, daß der Frequenzverdopplerkristall (24) innerhalb des Meßkopfes (10) in einen optischen Resonator (28) angeordnet ist.

16. Faseroptischer Sensor nach Anspruch 14 oder 15, **dadurch gekennzeichnet**, daß der Frequenzverdopplerkristall (24) aus Beta-Barium-Borat (BBO) besteht.

17. Faseroptischer Sensor nach Anspruch 14 oder 15, **dadurch gekennzeichnet**, daß der Frequenzverdopplerkristall (24) aus Lithium-Triborat (LBO), aus Kaliumdihydrogenphosphat (KDP), aus Ammoniumdihydrogenphosphat (ADP) oder aus Neodymyttriumaluminiumtetraborat (NYAB) besteht.

18. Faseroptischer Sensor nach wenigstens einem der Ansprüche 15 bis 17, **dadurch gekennzeichnet**, daß beim Einsatz von verschiedenen Wellenlängen eine Kompensationsoptik zur Einstellung des geeigneten Phasenanpaßwinkels vorgesehen ist.

19. Faseroptischer Sensor nach wenigstens einem der Ansprüche 15 bis 17, **dadurch gekennzeichnet**, daß beim Einsatz von verschiedenen Wellenlängen eine Vorrichtung zur Verstellung des Frequenzverdopplerkristalls (24) vorgesehen ist.

20. Faseroptischer Sensor nach Anspruch 18 oder 19, **dadurch gekennzeichnet**, daß der Lichtwellenleiter auch für die Steuerung der Kompensationsoptik oder der Verstellung des Kristalls (24) vorgesehen ist und, zur vollständigen galvanischen Trennung, die elektrische Versorgung der Verstellvorrichtung durch eine Solarzelle im Meßkopf erfolgt, die das ungenutzte Anregungslicht in elektrische Energie wandelt.

21. Faseroptischer Sensor nach wenigstens einem der vorhergehenden Ansprüche, **dadurch gekennzeichnet**, daß die Lichtleitfaser (6,6') eine Einmodenfaser aus reinem Quarzglas ist.

Fig.1

EP 0 450 305 A1

Fig. 2

EP 0 450 305 A1

Fig. 3

EP 0 450 305 A1

Fig. 4

EP 0 450 305 A1

Fig. 5

Europäisches
Patentamt

EUROPÄISCHER
RECHERCHENBERICHT

Nummer der Anmeldung

EP 91 10 2865

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | ADV. INSTRUMENTATION, Band 38, Teil I, 1983, Seiten 407-418; F.P. MILANOVICH et al.: "Process, product, and waste stream monitoring with fiber optics" * Seite 408, Zeilen 16-36; Seite 409, Zeilen 5-8; Seite 410; Figuren 1-3 * | 1-14 | G 01 N 21/64 G 02 F 1/37 |
| Y | DE-A-3 318 376 (PREUSSAG) * Spalte 2, Zeilen 30-67 * | 1,3-14 | |
| Y | PATENT ABSTRACTS OF JAPAN, Band 11, Nr. 144 (P-574)[2591], 12. Mai 1987; & JP-A-61 281 950 (HITACHI LTD) 12-12-1986 | 2 | |
| Y | EP-A-0 284 811 (FIRMA CARL ZEISS) * Zusammenfassung * | 10 | |
| A | IBM TECHNICAL DISCLOSURE BULLETIN, Band 10, Nr. 9, Februar 1968, Seiten 1381,1382, New York, US; V.T. TOWNSEND: "Airborne microorganism detection" | 14,17 | |
| A | WO-A-9 001 692 (EDINBURGH INSTRUMENTS LTD) * Seite 5, Zeilen 24-38; Seite 11, Zeilen 23-25; Seite 16, Zeile 35 - Seite 17, Zeile 1; Figur 3 * | 1,3,4,21 | RECHERCHIERTE SACHGEBIETE (Int. Cl.5) G 01 N |
| A | APPLIED OPTICS, Band 22, Nr. 21, November 1983, Seiten 3382-3387, New York, US; G.A. CAPELLE et al.: "Aerial testing of a KrF laser-based fluorosensor" | 3,11,12 | |
| A | ANALYTICAL INSTRUMENTATION, Band 16, Nr. 4, 1987, Seiten 423-445; J.E. KENNY et al.: "Remote laser-induced fluorescence monitoring of groundwater contaminants: prototype field instrument" | | |

Der vorliegende Recherchenbericht wurde für alle Patentansprüche erstellt

| Recherchenort | Abschlußdatum der Recherche | Prüfer |
|---|---|---|
| Den Haag | 25 Juli 91 | KLEIKAMP B.M.H.H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument